# EUROPEAN PATENT APPLICATION

(11) **EP 2 986 081 A1**
(43) Date of publication of application: **17.02.2016**
(21) Application number: 13884354.5
(22) Date of filing: 06.05.2013
(51) Int. Cl.: H04W 88/10

(54) **METHOD AND APPARATUS FOR COLLABORATIVE COMMUNICATION BETWEEN MULTIPLE SYSTEMS, AND COMMUNICATIONS NODE**

(71) Applicant: Huawei Technologies Co., Ltd., Longgang District Shenzhen, Guangdong 518129 (CN)
(72) Inventor: FAN, Shuju, Shenzhen Guangdong 518129 (CN); WANG, Zongjie, Shenzhen Guangdong 518129 (CN)
(74) Representative: Maiwald Patentanwalts GmbH
(86) International application number: PCT/CN2013/075187
(87) International publication number: WO 2014/179918

(57) **Abstract**

A multi-system coordinated communication method and apparatus, and a communications node are disclosed. The method includes: when transmitting data by using a second system, adding, by a first communications node to data information of a first system, control information used by the second system to send data; and indicating, in control information of the first system, that the data information of the first system includes the control information used by the second system to send data, where the first system and the second system are: systems of different modes, or systems of a same mode that use different resources; and separately sending, by the first communications node to a second communications node by using a control channel and a data channel of the first system, the control information of the first system and the data information of the first system that carries the control information used by the second system to send data. In embodiments of the present invention, when communication is performed by using the second system, the control information of the second system is sent by using the channel of the first system, thereby saving channel resources of the second system, and improving utilization of system resources.

## Description

### TECHNICAL FIELD

The present invention relates to the field of communications technologies, and in particular, to a multi-system coordinated communication method and apparatus, and a communications node.

### BACKGROUND

In a current communications system, in a process of data transmission at a physical layer, generally at least two types of channels are needed, that is, a data channel, configured to carry data information that needs to be transmitted, and a control channel, configured to carry control information relevant to the data information. For example, in a Universal Mobile Telecommunications System (UMTS, Universal Mobile Telecommunications System), a base station (NodeB) sends data to user equipment (UE, User Equipment) by using a high-speed physical downlink shared channel (HS-PDSCH, High-Speed Physical Downlink Shared Channel) of the physical layer, and additionally sends control signaling relevant to the HS-PDSCH by using a downlink high-speed control channel (HS-SCCH, High-Speed Shared Control Channel); and after receiving a control instruction sent by using the HS-SCCH, the UE performs, by using control information carried over the HS-SCCH, demodulation, decoding, and the like on information carried over the HS-PDSCH, and feeds back corresponding information to the base station, so that the base station uses the information fed back by the UE as a basis for service scheduling.

Although a multi-mode communications device is provided in the prior art, it only refers to that the device supports multiple modes, and operations in different modes are independent of each other and do not interact with each other. Generally, the UE can already support a multi-mode communications technology, for example, GSM/WCDMA, but an anchor for coordination between the two modes is generally at an upper layer (which is above the physical layer); and multiple systems on a network side are still independent of each other, that is, the multiple systems separately exchange information with the UE, and the UE only selects different network channels for services of the different systems.

Therefore, during study and practice of the prior art, the inventor of the present invention finds that, in an existing wireless communications technology, when communication is performed by using the multiple systems, each system occupies a corresponding control channel and data channel, causing a waste of channel resources. Therefore, when communication is performed by using multiple systems, how to improve utilization of system resources is a problem to be solved currently.

### SUMMARY

Embodiments of the present invention provide a multi-system coordinated communication method and apparatus, and a communications node, to improve utilization of a system resource.

To solve the foregoing technical problem, the embodiments of the present invention disclose the following technical solutions:

A first aspect provides a multi-system coordinated communication method, and the method includes:
when transmitting data by using a second system, adding, by a first communications node to data information of a first system, control information used by the second system to send data; and indicating, in control information of the first system, that the data information of the first system includes the control information used by the second system to send data, where the first system and the second system are: systems of different modes, or systems of a same mode that use different resources; and
sending, by the first communications node, the control information of the first system to a second communications node by using a control channel of the first system; and sending, to the second communications node by using a data channel of the first system, the data information of the first system that carries the control information used by the second system to send data.

In a first possible implementation manner of the first aspect, the indicating, in control information of the first system, that the data information of the first system includes the control information used by the second system to send data includes:
indicating, in an explicit manner or an implicit manner in the control information of the first system, that the data information of the first system includes the control information used by the second system to send data.

With reference to the first aspect or the first possible implementation manner of the first aspect, in a second possible implementation manner, the indicating, in an explicit manner in the control information of the first system, that the data information of the first system includes the control information used by the second system to send data is specifically: indicating, in a field in the control information of the first system by using an information field, that the data information of the first system includes the control information used by the second system to send data.

With reference to the first aspect or the first or the second possible implementation manner of the first aspect, in a third possible implementation manner, the indicating, in an implicit manner in the control information of the first system, that the data information of the first system includes the control information used by the second system to send data is specifically: indicating, by using an undefined combination or a specific value combination in an existing field, that the data information of the first system includes the control information used by the second system to send data, where the existing field is an existing field in the control information of the first system.

With reference to the first aspect or the first, the second, or the third possible implementation manner of the first aspect, in a fourth possible implementation manner, the method further includes:
receiving, by the first communications node, a response message sent by the second communications node, where the response message includes: first feedback information in response to the data information of the first system and radio channel quality of the first system, and second feedback information in response to data information of the second system and radio channel quality of the second system.

With reference to the first aspect or the first, the second, the third, or the fourth possible implementation manner of the first aspect, in a fifth possible implementation manner, the receiving, by the first communications node, a response message sent by the second communications node includes:
receiving, by the first communications node, a response message that is used to respond to the second system and is sent by the second communications node by using the data channel of the first system, and indicating, in the control information of the first system, that the data information of the first system includes response information of the second system; or
receiving, by the first communications node, a response message that is used to respond to the second system and is sent by the second communications node by using a feedback control channel of the first system.

A second aspect provides a multi-system coordinated communication method, including:
receiving, by a second communications node, control information and data information of a first system that are sent by a first communications node, where the data information of the first system includes: control information used by a second system to send data; and the control information of the first system includes: indication information indicating that the data information of the first system includes the control information used by the second system to send data, where the first system and the second system are: systems of different modes, or systems of a same mode that use different resources; and
demodulating and decoding, by the second communications node according to the indication information and by using the control information of the second system, received data sent by the second system.

In a first possible implementation manner of the second aspect, the method further includes:
sending, by the second communications node, a response message to the first communications node, where the response message includes: first feedback information in response to the data information of the first system and radio channel quality of the first system, and second feedback information in response to data information of the second system and radio channel quality of the second system.

With reference to the second aspect or the first possible implementation manner of the second aspect, in a second possible implementation manner, the sending, by the second communications node, a response message to the first communications node includes:
sending, by the second communications node to the first communications node by using a data channel of the first system, a response message used to respond to the second system, and indicating, in the control information of the first system, that the data information of the first system includes response information of the second system; or
sending, by the second communications node to the first communications node by using a feedback control channel of the first system, a response message used to respond to the second system.

A third aspect provides a multi-system coordinated communication apparatus, including:
an adding unit, configured to: when data is transmitted by using a second system, add, to data information of a first system, control information used by the second system to send data, where the first system and the second system are: systems of different modes, or systems of a same mode that use different resources;
an indication unit, configured to indicate, in control information of the first system, that the data information of the first system includes the control information used by the second system to send data; and
a sending unit, configured to send the control information of the first system to a first communications node by using a control channel of the first system; and send, to the first communications node by using a data channel of the first system, the data information of the first system that carries the control information used by the second system to send data.

In a first possible implementation manner of the third aspect, the indication unit includes:
an explicit indication unit, configured to indicate, in an explicit manner in the control information of the first system, that the data information of the first system includes the control information used by the second system to send data; or
an implicit indication unit, configured to indicate, in an implicit manner, that the data information of the first system includes the control information used by the second system to send data.

With reference to the third aspect or the first possible implementation manner of the third aspect, in a second possible implementation manner,
the explicit indication unit is specifically configured to indicate, in a field in the control information of the first system by using an information field, that the data information of the first system includes the control information used by the second system to send data; or
the implicit indication unit is specifically configured to indicate, by using an undefined combination or a specific value combination in an existing field, that the data information of the first system includes the control information used by the second system to send data, where the existing field is an existing field in the control information of the first system.

With reference to the third aspect or the first or the second possible implementation manner of the third aspect, in a third possible implementation manner, the apparatus further includes:
a receiving unit, configured to receive a response message sent by the first communications node, where the response message includes: first feedback information in response to the data information of the first system and radio channel quality of the first system, and second feedback information in response to data information of the second system and radio channel quality of the second system.

With reference to the third aspect or the first, the second, or the third possible implementation manner of the third aspect, in a fourth possible implementation manner,
the receiving unit is specifically configured to receive a response message that is used to respond to the second system and is sent by the first communications node by using the data channel of the first system, and indicate, in the control information of the first system, that the

data information of the first system includes response information of the second system; or specifically configured to receive a response message that is used to respond to the second system and is sent by the first communications node by using a feedback control channel of the first system.

With reference to the third aspect or the first, the second, the third, or the fourth possible implementation manner of the third aspect, in a fifth possible implementation manner, the apparatus is integrated in a base station, or integrated in user equipment.

A fourth aspect provides a multi-system coordinated communication apparatus, including:
a receiving unit, configured to receive control information and data information of a first system that are sent by a first communications node, where the data information of the first system includes: control information used by a second system to send data; and the control information of the first system includes: indication information indicating that the data information of the first system includes the control information used by the second system to send data, where the first system and the second system are: systems of different modes, or systems of a same mode that use different resources; and
a demodulation and decoding unit, configured to demodulate and decode, according to the indication information and by using the control information of the second system, received data sent by the second system.

In a first possible implementation manner of the fourth aspect, the apparatus further includes:
a sending unit, configured to send a response message to the first communications node, where the response message includes: first feedback information in response to the data information of the first system and radio channel quality of the first system, and second feedback information in response to data information of the second system and radio channel quality of the second system.

With reference to the fourth aspect or the first possible implementation manner of the fourth aspect, in a second possible implementation manner,
the sending unit is specifically configured to send, to the first communications node by using a data channel of the first system, a response message used to respond to the second system, and indicate, in the control information of the first system, that the data information of the first system includes response information of the second system; or send, to the first communications node by using a feedback control channel of the first system, a response message used to respond to the second system.

With reference to the fourth aspect or the first or the second possible implementation manner of the fourth aspect, in a third possible implementation manner, the apparatus is integrated in a base station, or integrated in user equipment.

A fifth aspect provides a communications node, including:
a processor, configured to: when data is transmitted by using a second system, add, to data information of a first system, control information used by the second system to send data; and indicate, in control information of the first system, that the data information of the first system includes the control information used by the second system to send data, where the first system and the second system are: systems of different modes, or systems of a same mode that use different resources; and
a radio transceiver, configured to send the control information of the first system to a second communications node by using a control channel of the first system; and send, to the second communications node by using a data channel of the first system, the data information of the first system that includes the control information used by the second system to send data.

In a first possible implementation manner of the fifth aspect, the indicating, in control information of the first system by the processor, that the data information of the first system includes the control information used by the second system to send data includes:
indicating, in an explicit manner or an implicit manner in the control information of the first system by the processor, that the data information of the first system includes the control information used by the second system to send data.

With reference to the fifth aspect or the first possible implementation manner of the fifth aspect, in a second possible implementation manner, the indicating, in an explicit manner or an implicit manner in the control information of the first system by the processor, that the data information of the first system includes the control information used by the second system to send data specifically includes:
indicating, in a field in the control information of the first system by the processor by using an information field, that the data information of the first system includes the control information used by the second system to send data; or indicating, by using an undefined combination or a specific value combination in an existing field, that the data information of the first system includes the control information used by the second system to send data, where the existing field is an existing field in the control information of the first system.

With reference to the fifth aspect or the first or the second possible implementation manner of the fifth aspect, in a third possible implementation manner, the radio transceiver is further configured to receive a response message sent by the second communications node, where the response message includes: first feedback information in response to the data information of the first system and radio channel quality of the first system, and second feedback information in response to data information of the second system and radio channel quality of the second system.

With reference to the fifth aspect or the first, the second, or the third possible implementation manner of the fifth aspect, in a fourth possible implementation manner,
the radio transceiver is specifically configured to receive a response message that is used to respond to the second system and is sent by the second communications node by using the data channel of the first system, and indicate, in the control information of the first system, that the data information of the first system includes response information of the second system; or receive a response message that is used to respond to the second system and is sent by the second communications node by using a feedback control channel of the first system.

With reference to the fifth aspect or the first, the second, the third, or the fourth possible implementation manner of the fifth aspect, in a fifth possible implementation manner, the communications node is a base station, and the second communications node is user equipment; or the communications node is user equipment, and the second communications node is a base station.

A sixth aspect provides a communications node, including:
a transceiver, configured to receive control information and data information of a first system that are sent by a second communications node, where the data information of the first system includes: control information used by a second system to send data; and the control information of the first system includes: indication information indicating that the data information of the first system includes the control information used by the second system to send data, where the first system and the second system are: systems of different modes, or systems of a same mode that use different resources; and
a processor, configured to demodulate and decode, according to the indication information and by using the control information of the second system, received data sent by the second system.

In a first possible implementation manner of the sixth aspect, the transceiver is further configured to send a response message to the second communications node, where the response message includes: first feedback information in response to the data information of the first system and radio channel quality of the first system, and second feedback information in response to data information of the second system and radio channel quality of the second system.

With reference to the sixth aspect or the first possible implementation manner of the sixth aspect, in a second possible implementation manner, the transceiver is specifically configured to send, to the second communications node by using a data channel of the first system, a response message used to respond to the second system, and indicate, in the control information of the first system, that the data information of the first system includes response information of the second system; or send, to the second communications node by using a feedback control channel of the first system, a response message used to respond to the second system.

With reference to the sixth aspect or the first or the second possible implementation manner of the sixth aspect, in a third possible implementation manner, the communications node is user equipment, and the second communications node is a base station; or the communications node is a base station, and the second communications node is user equipment.

It can be known from the foregoing technical solutions that, in the embodiments of the present invention, when communication is performed by using multiple systems (for example, a first system and a second system), control information used by the second system to send data is sent by using a data channel of the first system, thereby saving control channel resources of the second system, and improving utilization of system resources.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a multi-system coordinated communication method according to an embodiment of the present invention;
FIG. 2 is another flowchart of a multi-system coordinated communication method according to an embodiment of the present invention;
FIG. 3 is a schematic structural diagram of a multi-system coordinated communication apparatus according to an embodiment of the present invention;
FIG. 4 is another schematic structural diagram of a multi-system coordinated communication apparatus according to an embodiment of the present invention;
FIG. 5 is another schematic structural diagram of a multi-system coordinated communication apparatus according to an embodiment of the present invention;
FIG. 6 is another schematic structural diagram of a multi-system coordinated communication apparatus according to an embodiment of the present invention;
FIG. 7 is a schematic structural diagram of a communications node according to an embodiment of the present invention; and
FIG. 8 is another schematic structural diagram of a communications node according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

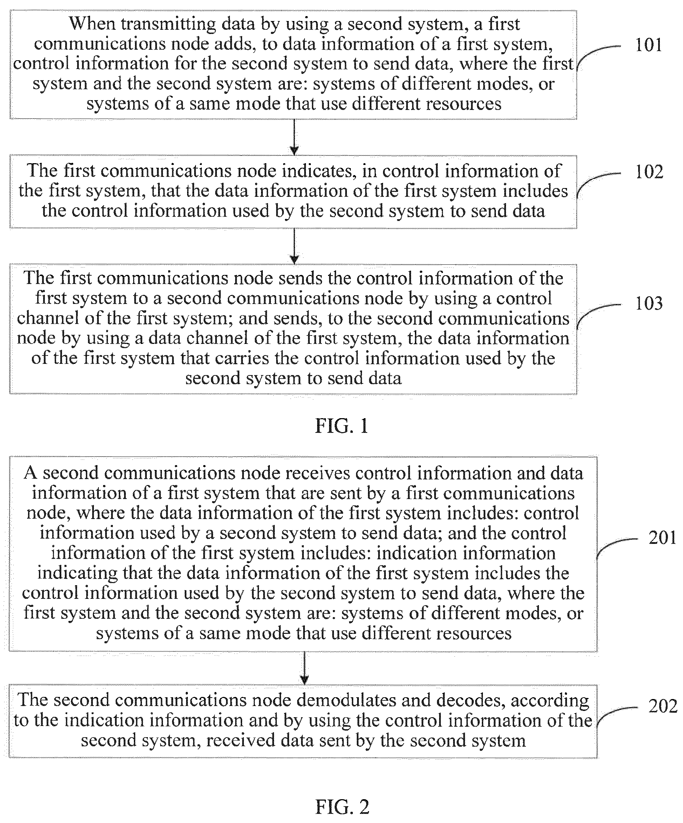

Referring to FIG. 1, FIG. 1 is a flowchart of a multi-system coordinated communication method according to an embodiment of the present invention. In this embodiment, when a first communications node is a device on a network side, a second communications node is user equipment; or when a first communications node is user equipment, a second communications node is a device on a network side, where the device on the network side may be a base station. The method includes:

Step 101: When transmitting data by using a second system, a first communications node adds, to data information of a first system, control information used by the second system to send data, where the first system and the second system are: systems of different modes, or systems of a same mode that use different resources.

The first system and the second system may be two systems that operate independent of each other, or may be two systems that are obtained by dividing one system. For example, one communications system is divided into a first communications system and a second communications system, and the like, which is not limited in this embodiment.

For example, the first system may be a Universal Mobile Telecommunications System (UMTS, Universal Mobile Telecommunications System), and the second system may be a Long Term Evolution (LTE, Long Term Evolution) system, or the first system is an LTE system, and the second system is a UMTS system. Certainly, the first system and the second system each may also be one of a Global System for Mobile communications system (GSM, Global System for Mobile communications) system, a wireless fidelity (Wifi, wireless fidelity) system, and Wideband Code Division Multiple Access (WCDMA, Wideband Code Division Multiple Access) system.

In this step, when the first communications node needs to transmit data by using the second system, the first communications node first adds, to the data information of the first system, the control information used by the second system to send data, so that subsequently the first communications node sends, to the second communications node by using a data channel of the first system, the data information of the first system that includes the control information used by the second system to send data.

The control information used by the second system to send data may include: a modulation and coding scheme, a hybrid automatic repeat request (HARQ, Hybrid Automatic Repeat Request) process ID, a new data index, a redundancy version number, and the like.

Step 102: The first communications node indicates, in control information of the first system, that the data information of the first system includes the control information used by the second system to send data.

The first communications node needs to indicate, in the control information of the first system, that the data information of the first system includes the control information used by the second system to send data; for example, indication information is added to or carried in the control information of the first system, where the indication information is used to indicate that the data information of the first system includes the control information used by the second system to send data.

An indication manner may be an explicit manner, or may be an implicit manner, which is not limited in this embodiment of the present invention. The explicit manner is: indicating, in a field in the control information of the first system by using an information field, that the data information of the first system includes the control information used by the second system to send data, for example, one or more bits are used for indication, but the explicit manner is not limited thereto.

The implicit manner is: indicating, by using an undefined combination or a specific value combination in an existing field, that the data information of the first system includes the control information used by the second system to send data, where the existing field is an existing field in the control information of the first system; for example, one combination in 7 undefined combinations of a code channel set is used for indication, for example, any combination among binary numbers 1111001 to 1111111 is used for indication, but the implicit manner is not limited thereto. For another example, a value of a transport block set (TBS, Transport Block Set) is set to a specific sequence, for example, "111111 "; or a combination of special values of more than two information fields is used, for example, a value of a TBS is 63 (which is "111111" in binary), and a value of a redundancy version (RV, Redundancy Version) is 0 (which is "00" in binary).

In this embodiment, there is no particular time sequence for specific implementation of step 101 and step 102, and step 101 and step 102 may also be performed at the same time, which is not limited in this embodiment.

Step 103: The first communications node sends the control information of the first system to a second communications node by using a control channel of the first system; and sends, to the second communications node by using a data channel of the first system, the data information of the first system that carries the control information used by the second system to send data.

After receiving the information, the second communications node demodulates and decodes, according to the information and by using the control information of the second system, the received data sent by the second system.

That is, the first communications node sends the control information of the first system by using an idle control channel of the first system, and sends, by using an idle data channel of the first system, the data information of the first system that carries the control information used by the second system to send data.

It should be noted that, in this embodiment, each communications node supports multiple systems, and each system includes at least two channels, for example, each system supports one control channel and one data channel. Certainly, each system may also support two data channels and two control channels, or may support two control channels and one data channel, or may support one control channel and two data channel, and the like, which is not limited in this embodiment.

It should be noted that, in this embodiment, the second system may be one system, or may be multiple systems, which is not limited in this embodiment. When the second system is multiple systems, an implementation process of each system is similar to the foregoing implementation process of one system. Refer to the description above for details, and details are not described again herein.

In this embodiment of the present invention, when a first communications node needs to transmit data by using a second system, the first communications node adds, to data information of a first system, control information used by the second system to send data, indicates, in control information of the first system, that the data information of the first system includes the control information used by the second system to send data, and then sends the control information and the data information separately by using a control channel and a data channel of the first system. It may be known that, in this embodiment of the present invention, when data is sent by using two system (for example, a first system and a second system), the control information used by the second system to send data is carried in the data information of the first system, and is sent by using the data channel of the first system, thereby saving control channel resources of the second system, and improving utilization of system resources.

Optionally, on the basis of the foregoing embodiment, the method may further include: receiving, by the first communications node, a response message sent by the second communications node, where the response message includes: first feedback information in response to the data information of the first system and radio channel quality of the first system, and second feedback information in response to data information of the second system and radio channel quality of the second system.

That is, the second communications node sends the second feedback information to the first communications node by using a feedback control channel of the first system; and certainly, the second feedback information may also be sent to the first communications node by using the data channel of the first system.

Optionally, on the basis of the foregoing embodiment, the receiving, by the first communications node, a response message sent by the second communications node includes:
receiving, by the first communications node, a response message that is used to respond to the second system and is sent by the second communications node by using the data channel of the first system, and indicating, in the control information of the first system, that the data information of the first system includes response information of the second system; that is, the second feedback information is carried in the data information of the first system (that is, carried in data of the first system), and is used to assist the first communications node in data scheduling on the second system; or
receiving, by the first communications node, a response message that is used to respond to the second system and is sent by the second communications node by using a feedback control channel of the first system.

That is, the second communications node sends the second feedback information and the first feedback information to the first communications node by using the feedback control channel or the data channel of the first system node.

In this embodiment, the second communications node sends, to the first communications node by using the control channel of the first system, feedback information that should be fed back by using a control channel of the second system and includes, for example, acknowledgement (ACK, Acknowledgement) information, non-acknowledgement (NACK, Non-Acknowledgement) information, a hybrid automatic repeat request-acknowledgement (HARQ-ACK, Hybrid Automatic Repeat Request-Acknowledgement) message of discontinuous transmission (DTX, Discontinuous Transmission) information, channel quality indicator (CQI, Channel Quality Indicator) information, and/or precoding control indication (PCI, Precoding Control indication), so that the first communications node performs data scheduling on the second system according to the information, thereby saving system resources, and improving utilization of system resources.

Further referring to FIG. 2, FIG. 2 is another flowchart of a multi-system coordinated communication method according to an embodiment of the present invention. The method includes:

Step 201: A second communications node receives control information and data information of a first system that are sent by a first communications node, where the data information of the first system includes: control information used by a second system to send data; and the control information of the first system includes: indication information indicating that the data information of the first system includes the control information used by the second system to send data, where the first system and the second system are: systems of different modes, or systems of a same mode that use different resources.

Step 202: The second communications node demodulates and decodes, according to the indication information and by using the control information of the second system, received data sent by the second system.

In this embodiment of the present invention, the second communications node receives the control information and the data information of the first system that are sent by the first communications node; parses the control information and the data information, to obtain the control information used by the second system to send data; and after receiving data that is sent by the second system by using a data channel of the second system, demodulates and decodes, by using the control information used by the second system to send data, the received data from the second system. After that, the second communications node generates corresponding ACK information, NACK information, or DTX information according to a receiving status of the data and whether the data is decoded correctly. In addition, the second communications node may further measure a status of a channel from the first communications node to the second communications node to generate CQI information.

Optionally, on the basis of the foregoing embodiment, the method may further include: sending, by the second communications node, a response message to the first communications node, where the response message includes: first feedback information in response to the data information of the first system and radio channel quality of the first system, and second feedback information in response to data information of the second system and radio channel quality of the second system.

The feedback information may be ACK, NACK, or DTX information, or may be CQI information, or the like, but the feedback information is not limited thereto, and may further include other information. The feedback information may be sent to the second communications node by using a control channel of the first system, so that the second communications node uses the information fed back by the first communications node as a basis for service scheduling.

The sending, by the second communications node, a response message to the first communications node includes:
sending, by the second communications node to the first communications node by using a data channel of the first system, a response message used to respond to the second system, and indicating, in the control information of the first system, that the data information of the first system includes response information of the second system; that is, the second feedback information is carried in the data information of the first system, and is used to assist the first communications node in data scheduling on the second system; or
sending, by the second communications node to the first communications node by using a feedback control channel of the first system, a response message used to respond to the second system.

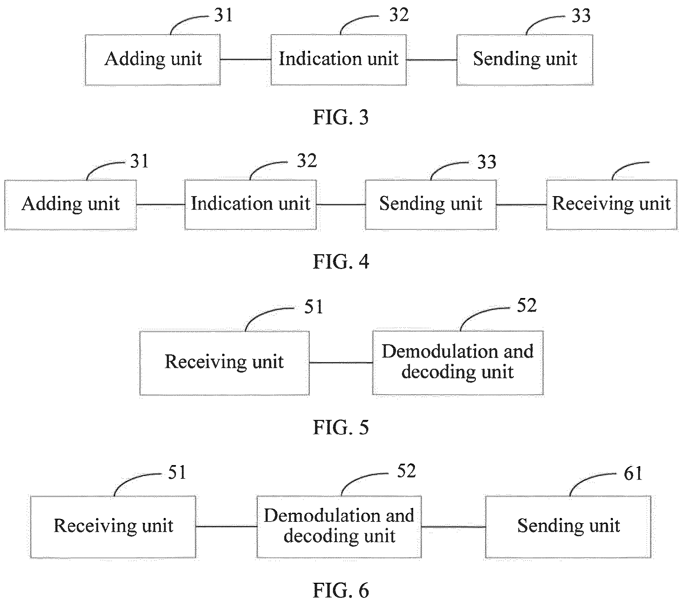

Based on an implementation process of the foregoing method, an embodiment of the present invention further provides a multi-system coordinated communication apparatus, and a schematic structural diagram of the apparatus is shown in FIG. 3. The apparatus includes: an adding unit 31, an indication unit 32, and a sending unit 33, where the adding unit 31 is configured to: when data is transmitted by using a second system, add, to data information of a first system, control information used by the second system to send data, where the first system and the second system are: systems of different modes, or systems of a same mode that use different resources; the indication unit 32 is configured to indicate, in control information of the first system, that the data information of the first system includes the control information used by the second system to send data; and the sending unit 33 is configured to send, to a first communications node by using a control channel of the first system, the control information of the first system to which an indication has been added by the indication unit; and send, to the first communications node by using a data channel of the first system, the data information of the first system that carries the control information used by the second system to send data.

Optionally, the indication unit includes: an explicit indication unit and/or an implicit indication unit, where,
the explicit indication unit is configured to indicate, in an explicit manner in the control information of the first system, that the data information of the first system includes the control information used by the second system to send data; and is specifically configured to indicate, in a field in the control information of the first system by using an information field, that the data information of the first system includes the control information used by the second system to send data; and
the implicit indication unit is configured to indicate, in an implicit manner, that the data information of the first system includes the control information used by the second system to send data; and is specifically configured to indicate, by using an undefined combination or a specific value combination in an existing field, that the data information of the first system includes the control information used by the second system to send data, where the existing field is an existing field in the control information of the first system.

Optionally, on the basis of the embodiment in FIG. 3, the apparatus may further include: a receiving unit 41, and a schematic structural diagram of the apparatus is shown in FIG. 4. FIG. 4 is another schematic structural diagram of a multi-system coordinated communication apparatus according to an embodiment of the present invention. The receiving unit 41 is configured to receive a response message sent by the first communications node, where the response message includes: first feedback information in response to the data information of the first system and radio channel quality of the first system, and second feedback information in response to data information of the second system and radio channel quality of the second system.

The receiving unit is specifically configured to receive a response message that is used to respond to the second system and is sent by the first communications node by using the data channel of the first system, and indicate, in the control information of the first system, that the data information of the first system includes response information of the second system; or specifically configured to receive a response message that is used to respond to the second system and is sent by the first communications node by using a feedback control channel of the first system.

Optionally, in this embodiment, the apparatus may be integrated in a base station, or may be integrated in user equipment, or may further be independently deployed, which is not limited in this embodiment.

For details about implementation processes of functions and effects of the units in this embodiment of the present invention, refer to corresponding implementation processes in the foregoing method, and details are not described again herein.

An embodiment of the present invention further provides a multi-system coordinated communication apparatus, and a schematic structural diagram of the apparatus is shown in FIG. 5. The apparatus includes: a receiving unit 51 and a demodulation and decoding unit 52, where the receiving unit 51 is configured to receive control information and data information of a first system that are sent by a first communications node, where the data information of the first system includes: control information used by a second system to send data; and the control information of the first system includes: indication information indicating that the data information of the first system includes the control information used by the second system to send data, where the first system and the second system are: systems of different modes, or systems of a same mode that use different resources; and the demodulation and decoding unit 52 is configured to demodulate and decode, according to the indication information and by using the control information of the second system, received data sent by the second system.

Optionally, on the basis of the embodiment in FIG. 5, the apparatus may further include: a sending unit 61, and a schematic structural diagram of the apparatus is shown in FIG. 6. FIG. 6 is another schematic structural diagram of a multi-system coordinated communication apparatus according to an embodiment of the present invention. The sending unit 61 is configured to send a response message to the first communications node, where the response message includes: first feedback information in response to the data information of the first system and radio channel quality of the first system, and second feedback information in response to data information of the second system and radio channel quality of the second system.

The sending unit is specifically configured to send, to the first communications node by using a data channel of the first system, a response message used to respond to the second system, and indicate, in the control information of the first system, that the data information of the first system includes response information of the second system; or send, to the first communications node by using a feedback control channel of the first system, a response message used to respond to the second system.

Optionally, the apparatus may be integrated in a base station, or may be integrated in user equipment, or may further be independently deployed, which is not limited in this embodiment.

For details about implementation processes of functions and effects of the units in this embodiment of the present invention, refer to corresponding implementation processes in the foregoing method, and details are not described again herein.

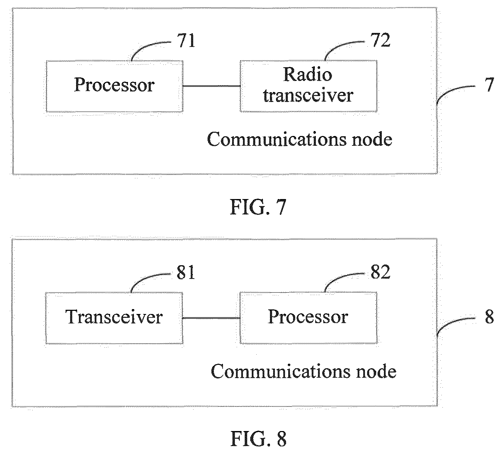

An embodiment of the present invention provides a communications node. The communications node 7 includes: a processor 71 and a radio transceiver 72, and a schematic structural diagram of the communications node is shown in FIG. 7. FIG. 7 is a schematic structural diagram of a communications node according to an embodiment of the present invention, where,
the processor 71 is configured to: when data is transmitted by using a second system, add, to data information of a first system, control information used by the second system to send data; and indicate, in control information of the first system, that the data information of the first system includes the control information used by the second system to send data, where the first system and the second system are: systems of different modes, or systems of a same mode that use different resources; and the radio transceiver 72 is configured to send, to a second communications node by using a control channel of the first system, the control information of the first system to which an indication has been added by the processor; and send, to the second communications node by using a data channel of the first system, the data information of the first system that includes the control information used by the second system to send data.

Optionally, the indicating, in control information of the first system by the processor, that the data information of the first system includes the control information used by the second system to send data includes: indicating, in an explicit manner or an implicit manner in the control information of the first system by the processor, that the data information of the first system includes the control information used by the second system to send data.

Optionally, the indicating, in an explicit manner or an implicit manner in the control information of the first system by the processor, that the data information of the first system includes the control information used by the second system to send data specifically includes: indicating, in a field in the control information of the first system by the processor by using an information field, that the data information of the first system includes the control information used by the second system to send data; or indicating, by using an undefined combination or a specific value combination in an existing field, that the data information of the first system includes the control information used by the second system to send data, where the existing field is an existing field in the control information of the first system.

Optionally, the radio transceiver is further configured to receive a response message sent by the second communications node, where the response message includes: first feedback information in response to the data information of the first system and radio channel quality of the first system, and second feedback information in response to data information of the second system and radio channel quality of the second system.

The radio transceiver is specifically configured to receive a response message that is used to respond to the second system and is sent by the second communications node by using the data channel of the first system, and indicate, in the control information of the first system, that the data information of the first system includes response information of the second system; that is, the second feedback information is carried in the data information of the first system, and is used to assist the first communications node in data scheduling on the second system; or receive a response message that is used to respond to the second system and is sent by the second communications node by using a feedback control channel of the first system.

Optionally, when the communications node is a base station, the second communications node is user equipment; or, when the communications node is user equipment, the second communications node is a base station.

For details about implementation processes of functions and effects of the processor and the radio transceiver in this embodiment of the present invention, refer to corresponding implementation processes in the foregoing method, and details are not described again herein.

An embodiment of the present invention provides a communications node. The communications node 8 includes: a transceiver 81 and a processor 82, and a schematic structural diagram of the communications node is shown in FIG. 8. FIG. 8 is another schematic structural diagram of a communications node according to an embodiment of the present invention, where,
the transceiver 81 is configured to receive control information and data information of a first system that are sent by a second communications node, where the data information of the first system includes: control information used by a second system to send data; and the control information of the first system includes: indication information indicating that the data information of the first system includes the control information used by the second system to send data, where the first system and the second system are: systems of different modes, or systems of a same mode that use different resources; and
the processor 82 is configured to demodulate and decode, according to the indication information and by using the control information of the second system, received data sent by the second system.

Optionally, the transceiver is further configured to send a response message to the second communications node, where the response message includes: first feedback information in response to the data information of the first system and radio channel quality of the first system, and second feedback information in response to data information of the second system and radio channel quality of the second system.

Optionally, the transceiver is specifically configured to send, to the second communications node by using a data channel of the first system, a response message used to respond to the second system, and indicate, in the control information of the first system, that the data information of the first system includes response information of the second system; or send, to the second communications node by using a feedback control channel of the first system, a response message used to respond to the second system.

Optionally, when the communications node is user equipment, the second communications node is a base station; or, when the communications node is a base station, the second communications node is user equipment.

For ease of understanding of a person skilled in the art, description is made below by using a specific application instance, but the present invention is not limited thereto. In the following application instance, a first system and a second system being systems of different modes is used as an example, that is, the first system being a UMTS system and the second system being an LTE system is used as an example; and communication between a base station and user equipment is used as an example, but the present invention is not limited thereto.

In this application instance, when the base station needs to transmit data by using the LTE system, the base station adds, to the UMTS system, control information (which, no matter in an uplink or a downlink, includes at least a modulation and coding scheme, an HARQ process ID, a new data index, a redundancy version number, and the like) used by the LTE system to send data, uses the control information as data, and sends the data by using a data channel of the UMTS system. More specifically, the control information used by the LTE system to send data may be carried over a high-speed physical downlink shared channel (HS-PDSCH, High-Speed Physical Downlink Shared Channel) of the UMTS system. However, corresponding control information of the HS-PDSCH channel that carries the control information of the LTE system is carried over a high-speed shared control channel (HS-SCCH, High-Speed Shared Control Channel); an existing code channel set, a modulation scheme, an HARQ process ID, a transport block length, a redundancy version number, and the like need to be indicated on the HS-SCCH, and in addition, the HS-SCCH also needs to carry information to inform the user equipment that the control information of the LTE system is transmitted over the current HS-PDSCH, where the information may be referred to as LCI (LTE Control indicator) indication information; the information may be in an explicit manner, for example, one bit is added to an information field of the HS-SCCH; or may be in an implicit manner, for example, indication is implemented by using an undefined combination of an existing field, for example, one of 7 undefined combinations in the code channel set (CCS), for example, any one combination of binary numbers 1111001 to 1111111, is used as an LCI indication.

The user equipment receives control information and data information of the first system that are sent by the base station, where the data information of the first system includes: control information used by the second system to send data, and the control information of the first system includes: indication information indicating that the data information of the first system includes the control information used by the second system to send data; and then, demodulates and decodes, according to the indication information and by using the control information of the second system, received data sent by the second system.

After that, the user equipment generates ACK information, NACK information, or DTX information according to an HS-SCCH receiving status and whether the HS-PDSCH is correctly decoded or not. In addition, the user equipment further measures a status of a downlink channel to generate CQI information; and transmits the ACK/NACK/DTX information and the CQI information to the base station by carrying the information to a corresponding downlink channel of the UMTS system, and the base station uses the information fed back by the user equipment as a basis for service scheduling.

In addition, for service request information SR used in the uplink, the uplink control information (which is originally carried over a physical uplink control channel PUCCH, Physical Uplink Control Channel) may be carried in uplink data of the UMTS for transmission, for example, in an enhanced-dedicated physical data channel E-DPDCH, Enhanced-Dedicated Physical Data Channel.

In this embodiment of the present invention, when data is transmitted by using a second system, control information used by the second system to send data is carried in data information of a first system, it is indicated in control information of the first system that the data information of the first system includes the control information used by the second system to send data, and then the control information and the data information are separately sent by using a control channel and a data channel of the first system. It can be known that, in this embodiment of the present invention, when data is sent by using the second system, the control information used by the second system to send data is carried in the data information of the first system, and is sent by using the data channel of the first system, thereby saving control channel resources of the second system, and improving utilization of system resources.

In the embodiments of the present invention, user equipment (UE, User Equipment) may be any one of the following and may be static or mobile. Static user equipment may specifically be a terminal (terminal), a mobile station (mobile station), a subscriber unit (subscriber unit), a station (station), or the like. Mobile UE may specifically be a cellular phone (cellular phone), a personal digital assistant (PDA, personal digital assistant), a wireless modem (modem), a wireless communications device, a handheld device (handheld), a laptop computer (laptop computer), a cordless phone (cordless phone), a wireless local loop (WLL, wireless local loop) station, or the like. The user equipment may be distributed in an entire wireless network.

It should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

Based on the foregoing descriptions of the embodiments, a person skilled in the art may clearly understand that the present invention may be implemented by software in addition to a necessary universal hardware platform or by hardware only. In most circumstances, the former is a preferred implementation manner. Based on such an understanding, the technical solutions of the present invention essentially or the part contributing to the prior art may be implemented in a form of a software product. The software product may be stored in a storage medium, such as a ROM/RAM, a magnetic disk, or an optical disc, and includes several instructions for instructing a computer device (which may be a personal computer, a server, or a network device) to perform the methods described in the embodiments or some parts of the embodiments of the present invention.

The foregoing descriptions are merely exemplary implementation manners of the present invention. It should be noted that a person of ordinary skill in the art may make several improvements or polishing without departing from the principle of the present invention and the improvements or polishing shall fall within the protection scope of the present invention.

## Claims

1. A multi-system coordinated communication method, comprising:
when transmitting data by using a second system, adding, by a first communications node to data information of a first system, control information used by the second system to send data; and indicating, in control information of the first system, that the data information of the first system comprises the control information used by the second system to send data, wherein the first system and the second system are: systems of different modes, or systems of a same mode that use different resources; and
sending, by the first communications node, the control information of the first system to a second communications node by using a control channel of the first system; and sending, to the second communications node by using a data channel of the first system, the data information of the first system that carries the control information used by the second system to send data.

2. The method according to claim 1, wherein the indicating, in control information of the first system, that the data information of the first system comprises the control information used by the second system to send data comprises:
indicating, in an explicit manner or an implicit manner in the control information of the first system, that the data information of the first system comprises the control information used by the second system to send data.

3. The method according to claim 2, wherein the indicating, in an explicit manner in the control information of the first system, that the data information of the first system comprises the control information used by the second system to send data is specifically: indicating, in a field in the control information of the first system by using an information field, that the data information of the first system comprises the control information used by the second system to send data.

4. The method according to claim 2, wherein the indicating, in an implicit manner in the control information of the first system, that the data information of the first system comprises the control information used by the second system to send data is specifically: indicating, by using an undefined combination or a specific value combination in an existing field, that the data information of the first system comprises the control information used by the second system to send data, wherein the existing field is an existing field in the control information of the first system.

5. The method according to any one of claims 1 to 4, further comprising:
receiving, by the first communications node, a response message sent by the second communications node, wherein the response message comprises: first feedback information in response to the data information of the first system and radio channel quality of the first system, and second feedback information in response to data information of the second system and radio channel quality of the second system.

6. The method according to claim 5, wherein the receiving, by the first communications node, a response message sent by the second communications node comprises:
receiving, by the first communications node, a response message that is used to respond to the second system and is sent by the second communications node by using the data channel of the first system, and indicating, in the control information of the first system, that the data information of the first system comprises the response information of the second system; or
receiving, by the first communications node, a response message that is used to respond to the second system and is sent by the second communications node by using a feedback control channel of the first system.

7. A multi-system coordinated communication method, comprising:
receiving, by a second communications node, control information and data information of a first system that are sent by a first communications node, wherein the data information of the first system comprises: control information used by a second system to send data; and the control information of the first system comprises: indication information indicating that the data information of the first system comprises the control information used by the second system to send data, wherein the first system and the second system are: systems of different modes, or systems of a same mode that use different resources; and
demodulating and decoding, by the second communications node according to the indication information and by using the control information of the second system, received data sent by the second system.

8. The method according to claim 7, further comprising:
sending, by the second communications node, a response message to the first communications node, wherein the response message comprises: first feedback information in response to the data information of the first system and radio channel quality of the first system, and second feedback information in response to data information of the second system and radio channel quality of the second system.

9. The method according to claim 7, wherein the sending, by the second communications node, a response message to the first communications node comprises:
sending, by the second communications node to the first communications node by using a data channel of the first system, a response message used to respond to the second system, and indicating, in the control information of the first system, that the data information of the first system comprises response information of the second system; or
sending, by the second communications node to the first communications node by using a feedback control channel of the first system, a response message used to respond to the second system.

10. A multi-system coordinated communication apparatus, comprising:
an adding unit, configured to: when data is transmitted by using a second system, add, to data information of a first system, control information used by the second system to send data, wherein the first system and the second system are: systems of different modes, or systems of a same mode that use different resources;
an indication unit, configured to indicate, in control information of the first system, that the data information of the first system comprises the control information used by the second system to send data; and
a sending unit, configured to send the control information of the first system to a first communications node by using a control channel of the first system; and send, to the first communications node by using a data channel of the first system, the data information of the first system that carries the control information used by the second system to send data.

11. The apparatus according to claim 10, wherein the indication unit comprises:
an explicit indication unit, configured to indicate, in an explicit manner in the control information of the first system, that the data information of the first system comprises the control information used by the second system to send data; or
an implicit indication unit, configured to indicate, in an implicit manner, that the data information of the first system comprises the control information used by the second system to send data.

12. The apparatus according to claim 11, wherein,
the explicit indication unit is specifically configured to indicate, in a field in the control information of the first system by using an information field, that the data information of the first system comprises the control information used by the second system to send data; or
the implicit indication unit is specifically configured to indicate, by using an undefined combination or a specific value combination in an existing field, that the data information of the first system comprises the control information used by the second system to send data, wherein the existing field is an existing field in the control information of the first system.

13. The apparatus according to any one of claims 10 to 12, further comprising:
a receiving unit, configured to receive a response message sent by the first communications node, wherein the response message comprises: first feedback information in response to the data information of the first system and radio channel quality of the first system, and second feedback information in response to data information of the second system and radio channel quality of the second system.

14. The apparatus according to any one of claims 10 to 12, wherein,
the receiving unit is specifically configured to receive a response message that is used to respond to the second system and is sent by the first communications node by using the data channel of the first system, and indicate, in the control information of the first system, that the data information of the first system comprises response information of the second system; or specifically configured to receive a response message that is used to respond to the second system and is sent by the first communications node by using a feedback control channel of the first system.

15. The apparatus according to any one of claims 10 to 14, wherein the apparatus is integrated in a base station, or integrated in user equipment.

16. A multi-system coordinated communication apparatus, comprising:
a receiving unit, configured to receive control information and data information of a first system that are sent by a first communications node, wherein the data information of the first system comprises: control information used by a second system to send data; and the control information of the first system comprises: indication information indicating that the data information of the first system comprises the control information used by the second system to send data, wherein the first system and the second system are: systems of different modes, or systems of a same mode that use different resources; and
a demodulation and decoding unit, configured to demodulate and decode, according to the indication information and by using the control information of the second system, received data sent by the second system.

17. The apparatus according to claim 16, further comprising:
a sending unit, configured to send a response message to the first communications node, wherein the response message comprises: first feedback information in response to the data information of the first system and radio channel quality of the first system, and second feedback information in response to data information of the second system and radio channel quality of the second system.

18. The apparatus according to claim 16, wherein,
the sending unit is specifically configured to send, to the first communications node by using a data channel of the first system, a response message used to respond to the second system, and indicate, in the control information of the first system, that the data information of the first system comprises response information of the second system; or send, to the first communications node by using a feedback control channel of the first system, a response message used to respond to the second system.

19. The apparatus according to any one of claims 16 to 18, wherein the apparatus is integrated in a base station, or integrated in user equipment.

20. A communications node, comprising:
a processor, configured to: when data is transmitted by using a second system, add, to data information of a first system, control information used by the second system to send data; and indicate, in control information of the first system, that the data information of the first system comprises the control information used by the second system to send data, wherein the first system and the second system are: systems of different modes, or systems of a same mode that use different resources; and
a radio transceiver, configured to send the control information of the first system to a second communications node by using a control channel of the first system; and send, to the second communications node by using a data channel of the first system, the data information of the first system that comprises the control information used by the second system to send data.

21. The communications node according to claim 20, wherein the indicating, in control information of the first system by the processor, that the data information of the first system comprises the control information used by the second system to send data comprises:
indicating, in an explicit manner or an implicit manner in the control information of the first system by the processor, that the data information of the first system comprises the control information used by the second system to send data.

22. The communications node according to claim 21, wherein the indicating, in an explicit manner or an implicit manner in the control information of the first system by the processor, that the data information of the first system comprises the control information used by the second system to send data specifically comprises:
indicating, in a field in the control information of the first system by the processor by using an information field, that the data information of the first system comprises the control information used by the second system to send data; or indicating, by using an undefined combination or a specific value combination in an existing field, that the data information of the first system comprises the control information used by the second system to send data, wherein the existing field is an existing field in the control information of the first system.

23. The communications node according to any one of claims 20 to 22, wherein the radio transceiver is further configured to receive a response message sent by the second communications node, wherein the response message comprises: first feedback information in response to the data information of the first system and radio channel quality of the first system, and second feedback information in response to data information of the second system and radio channel quality of the second system.

24. The communications node according to claim 23, wherein,
the radio transceiver is specifically configured to receive a response message that is used to respond to the second system and is sent by the second communications node by using the data channel of the first system, and indicate, in the control information of the first system, that the data information of the first system comprises response information of the second system; or receive a response message that is used to respond to the second system and is sent by the second communications node by using a feedback control channel of the first system.

25. The communications node according to any one of claims 20 to 24, wherein the communications node is a base station, and the second communications node is user equipment; or the communications node is user equipment, and the second communications node is a base station.

26. A communications node, comprising:
a transceiver, configured to receive control information and data information of a first system that are sent by a second communications node, wherein the data information of the first system comprises: control information used by a second system to send data; and the control information of the first system comprises: indication information indicating that the data information of the first system comprises the control information used by the second system to send data, wherein the first system and the second system are: systems of different modes, or systems of a same mode that use different resources; and
a processor, configured to demodulate and decode, according to the indication information and by using the control information of the second system, received data sent by the second system.

27. The communications node according to claim 26, wherein the transceiver is further configured to send a response message to the second communications node, wherein the response message comprises: first feedback information in response to the data information of the first system and radio channel quality of the first system, and second feedback information in response to data information of the second system and radio channel quality of the second system.

28. The communications node according to claim 27, wherein the transceiver is specifically configured to send, to the second communications node by using a data channel of the first system, a response message used to respond to the second system, and indicate, in the control information of the first system, that the data information of the first system comprises response information of the second system; or send, to the second communications node by using a feedback control channel of the first system, a response message used to respond to the second system.

29. The communications node according to any one of claims 26 to 28, wherein the communications node is user equipment, and the second communications node is a base station; or the communications node is a base station, and the second communications node is user equipment.
